# EUROPÄISCHE PATENTSCHRIFT

(11) **EP 2 488 063 B1**
(45) Veröffentlichungstag und Bekanntmachung des Hinweises auf die Patenterteilung: **15.05.2013**
(21) Anmeldenummer: 10760217.9
(22) Anmeldetag: 13.09.2010
(51) Int. Cl.: E05D 5/08, A47B 95/00, F16B 12/20, E05D 5/02, E05D 7/12

(54) **BEFESTIGUNGSVORRICHTUNG FÜR MÖBELBESCHLÄGE**
FASTENING DEVICE FOR FURNITURE FITTINGS
DISPOSITIF DE FIXATION POUR FERRURES DE MEUBLE

(30) Priorität: 12.10.2009 AT 16032009
(43) Veröffentlichungstag der Anmeldung: 22.08.2012
(73) Patentinhaber: Julius Blum GmbH, 6973 Höchst (AT)
(72) Erfinder: RAICH, Oskar, A-6900 Bregenz (AT); NAGEL, Thomas, A-6973 Höchst (AT)
(74) Vertreter: Gangl, Markus
(86) Internationale Anmeldenummer: PCT/AT2010/000329
(87) Internationale Veröffentlichungsnummer: WO 2011/044598

(56) Entgegenhaltungen:
- WO-A1-99/24723
- DE-A1- 19 962 955
- DE-B3- 10 229 300
- DE-U1- 29 506 600

## Beschreibung

Die Erfindung betrifft eine Befestigungsvorrichtung für Möbelbeschläge an Möbeiteilen mit den Merkmalen des Oberbegriffs des Anspruchs 1, einen Möbelbeschlag mit einer solchen Befestigungsvorrichtung, einem Möbelteil mit einem solchen Möbelbeschlag und einem Möbel mit einem solchen Möbelteil.

Die Befestigung von Möbelbeschlägen mittels dübelartigen Klemmteilen hat gegenüber der Befestigung mittels Schrauben den Vorteil, dass die Montage werkzeuglos erfolgen kann und dadurch kürzere Montagezeiten erzielt werden können. Ein weiterer Vorteil von dübelartigen Klemmteilen liegt darin, dass diese nicht wie Schrauben "überdreht" werden können, was bei der Verwendung von Schrauben zu einem schlechteren Halt des Möbelbeschlags im Möbelteil führen kann.

So zeigt die DE 200 02 994 U1 einen Beschlag zur lösbaren Befestigung an einem Möbelteil mit einem am Möbelteil anliegenden Beschlagkörper mit mindestens einem hülsenartigen Verankerungsteil, der in eine Bohrung des Möbelteils einsetzbar ist, wobei an der vom Möbelteil abgewandten Seite des Beschlagkörpers ein Spannteil für den hülsenartigen Verankerungsteil angeordnet ist, der sich vorzugsweise am Beschlagkörper abstützt.

Die WO 19991024723 A1 zeigt einen Beschlag zur lösbaren Befestigung an einem Möbelteil mit einem am Möbelteil anliegenden Beschlagkörper, mindestens einer in eine Bohrung des Möbeiteils einsetzbaren, dübelartigen Spreizhülse, an deren Mantel mehrere in Axialrichtung versetzte Haltevorsprünge ausgebildet sind, vorzugsweise mit einer konischen Spitze und einem stiftförmigen Spreizteil für die Spreizhülse, der aus dem Beschlagkörper ragt, wobei an der vom Möbelteil abgewandten Seite des Beschlagkörpers ein Spannteil für die Spreizhülse angeordnet ist, der sich vorzugsweise am Beschlagkörper abstützt.

Allgemeinen Stand der Technik zeigen weiters die DE 195 05 311 A1, die US 5,536,122 A, die EP 1 054 168 A2 und die AT 352 333 B.

Aufgabe der Erfindung ist es, eine gegenüber dem Stand der Technik verbesserte Befestigungsvorrichtung für Möbeibeschläge einen verbesserten Möbeibeschlag, einen verbesserten Möbelteil und ein verbessertes Möbel anzugeben, die insbesondere auch in inhomogenen Materialien, wie zum Beispiel Spanplatten, einen guten Halt gewährleistet.

Diese Aufgabe wird durch eine Befestigungsvorrichtung mit den Merkmalen des Anspruchs 1, einem Möbelbeschlag mit einer solchen Befestigungsvorrichtung nach Anspruch 12, einem Möbelteil mit einem solchen Möbelbeschlag nach Anspruch 14 und einem Möbel mit einem solchen Möbelteil nach Anspruch 15 gelöst.

Die axial versetzten Schrägflächen führen dazu, dass die Dübelhülse am Dübelkem entlang gleitet und an diesen Schrägflächen parallel zu sich selbst aufgeht. Durch diese kontinuierliche Spreizung, die nicht nur im unteren Teil der Dübelhülse (wie bisher üblich), sondern über die gesamte Länge der Dübelhülse erfolgt, wird ein hoher, gleichmäßiger Halt in verschiedenen Materialien, wie Hartholz, MDF, Spanplatten, Weichholz usw. erzielt. Dies gilt insbesondere auch in festigkeitsmäßig inhomogenen Materialien, weil durch die Dübelanlage über einen größeren Bereich jedenfalls auch ein für den Halt günstiger festerer Bereich abgedeckt wird. wird.

Als besonders vorteilhaft hat es sich herausgestellt, wenn der Dübelkern mehrere in axialer Richtung versetzte Schrägflächen aufweist.

Gemäß einem bevorzugten Ausführungsbeispiel kann vorgesehen sein, dass die Dübelhülse mehrere in axialer Richtung versetzte Schrägflächen aufweist.

Konkret wird auch Schutz begehrt für einen Möbelbeschlag, ein Möbelteil und ein Möbel mit einer Befestigungsvorrichtung der beschriebenen Art.

Weiters kann bevorzugt vorgesehen sein, dass der Möbelbeschlag zwei Dübelkerne und zwei Dübelhülsen aufweist, die in zwei Bohrungen eines Möbelteils einsetzbar sind.

Als besonders vorteilhaft hat es sich erwiesen, wenn der Möbelbeschlag einen Scharniertopf aufweist, wobei die Befestigungsvorrichtung außerhalb des Schamiertopfes angeordnet ist.

Besonders bevorzugt kann vorgesehen sein, dass zwischen Dübelkern und Befestigungsflansch eine Distanzscheibe angeordnet ist.

Weitere vorteilhafte Ausführungsformen der Erfindung sind in den abhängigen Ansprüchen definiert.

Weiterer Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen:
- Fig. 1a: eine perspektivische Explosionsdarstellung eines Möbelbeschlags
- Fig. 1b: Schnitt Vorderansicht der Befestigungsvorrichtung eines Möbelbeschlags
- Fig. 2a: Seitenansicht einer geöffneten Befestigungsvorrichtung
- Fig. 2b: Seitenansicht einer geschlossenen Befestigungsvorrichtung
- Fig. 3a: Schnitt durch die Bohrung eines Möbelteils mit offener Befestigungsvorrichtung
- Fig. 3b: Schnitt einer Bohrung eines Möbeiteils mit geschlossener Befestigungsvorrichtung
- Fig. 4: eine perspektivische Darstellung eines Möbels mit Möbelbeschlägen

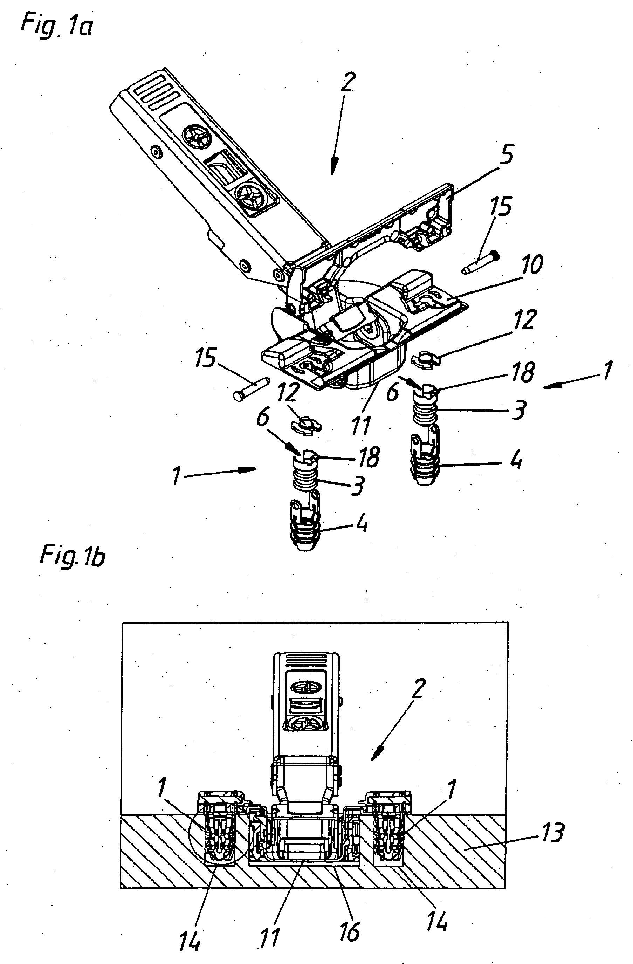

Fig. 1a zeigt einen Möbelbeschlag 2 für ein Möbelteil 13 (nicht dargestellt), welcher über eine Befestigungsvorrichtung 1 verfügt, die in zwei Bohrungen 14 (nicht dargestellt) eines Möbelteils 13 eingesetzt wird. In diesem Ausführungsbeispiel weist die Befestigungsvorrichtung 1 jeweils zwei Dübelkerne 3 und zwei Dübelhülsen 4 auf, die in zwei Bohrungen 14 eines Möbeiteils 13 einsetzbar sind. Eine Distanzscheibe 12 ist zwischen dem Dübelkern 3 und dem Befestigungsflansch 10 des Möbelbeschlags 2 angeordnet. Die Dübelhülse 4 kann über den Bolzen 15 durch die Betätigungsvorrichtung 5 in Richtung Befestigungsflansch 10 gezogen werden. Der Dübelkern 3 weist einen Längsschlitz 6 auf, welcher durchgängig durch den Dübelkern 3 axial verlaufend ausgebildet ist und somit eine zylindrische Federkernhülse darstellt.

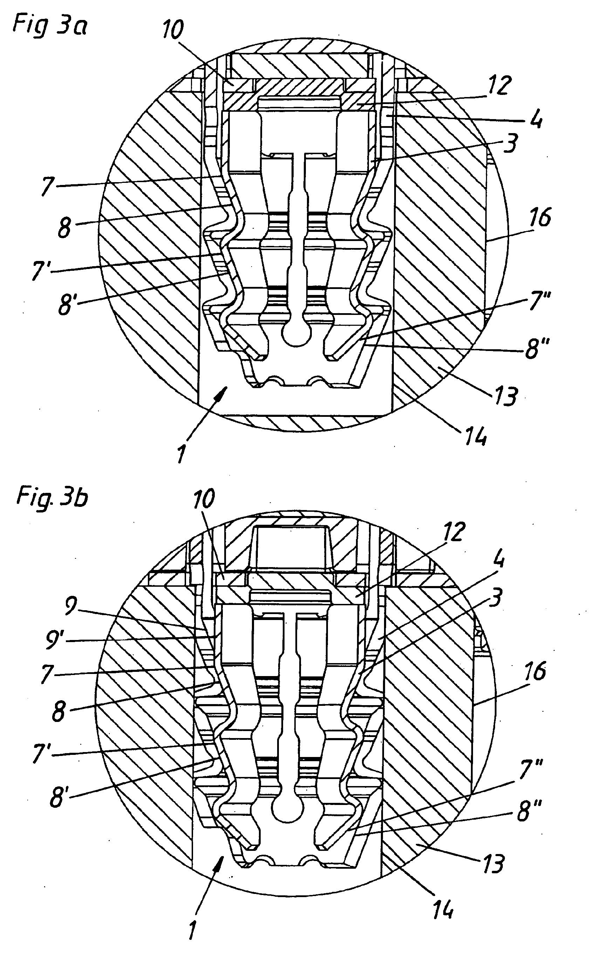

Das Material des Dübelkerns 3 und der Dübelhülse 4 ist vorzugsweise ein Metall, am besten Federstahl. So hat es sich in einem bevorzugten Ausführungsbeispiel als günstig erwiesen, wenn die Dübelhülse 4 aus Federstahl C67 und der Dübelkern 3 aus Federstahl C60 ausgebildet sind. Wird die Dübelhülse 4 mittels der Betätigungsvorrichtung 5 in Richtung Befestigungsflansch 10 gezogen, so wird sie durch den Dübelkern 3 aufgespreizt und führt damit zur Befestigung des Möbelbeschlags 2 in den Bohrungen 14 eines Möbelteils 13 (siehe Fig. 1b und 3b). Dabei ist der Dübelkern 3 in diesem Ausführungsbeispiel am Befestigungsflansch 10 angeordnet. Zwischen dem Dübelkern 3 und dem Befestigungsflansch 10 ist eine Distanzscheibe 12 angeordnet, wobei die Distanzscheibe 12 mit einem Teil in den Befestigungsflansch 10 und mit einem anderen Teil in die Bohrung 14 ragt. Dadurch kann die Distanzscheibe 12 Querkräfte übernehmen - unter anderem bei einer Belastung des Möbelteils 13 - und stabilisiert somit einerseits den Dübelkern 3 und andererseits führt dies weiters zu einer geringeren Deformation am Befestigungsflansch 10, wodurch mehr Anzug im gesamten System erfolgt. In diesem Ausführungsbeispiel wird die Distanzscheibe 12, welche bevorzugt über eine Nase 18 verfügt, in den Befestigungsflansch 10 eingehängt und ist somit an dem Befestigungsflansch 10 lösbar befestigt. Die Dübelhülse 4 ist in diesem Ausführungsbeispiel einstückig ausgebildet, ebenso könnte die Dübelhülse 4 in einem anderen Ausführungsbeispiel auch mehrteilig ausgebildet sein.

Fig. 1b zeigt einen Möbeibeschlag 2, der in den Bohrungen 14 eines Möbelteils 13 angeordnet ist. Die Befestigungsvorrichtung 1 des Möbelbeschlags 2 ist dabei in zwei Bohrungen 14 angeordnet, welche außerhalb der Bohrung 16 des Schamiertopfes 11 sich befinden.

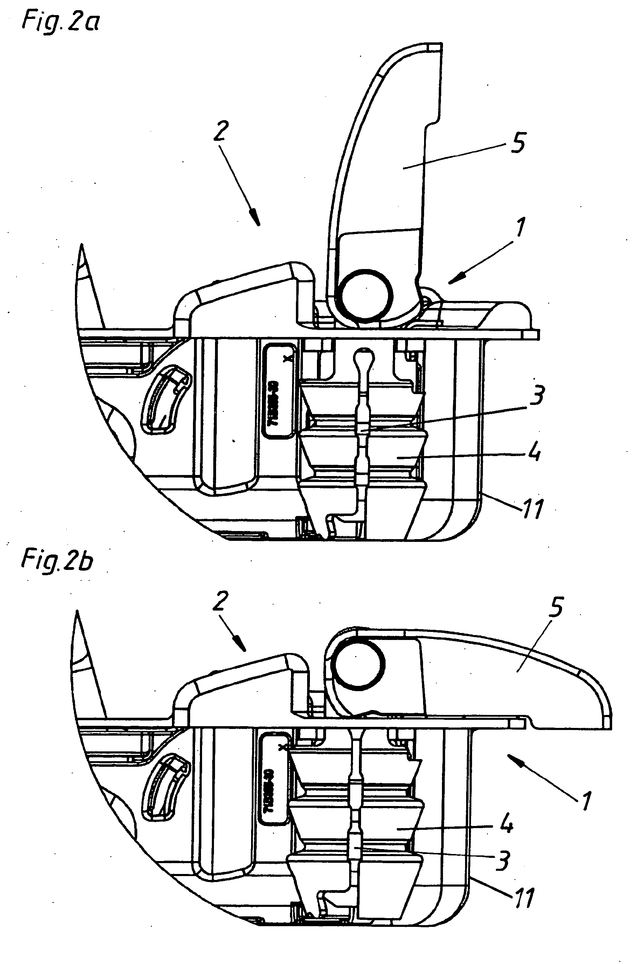

Fig. 2a zeigt einen Möbelbeschlag 2 mit einer Befestigungsvorrichtung 1, mit der der Möbelbeschlag 2 in einem Möbelteil 13 (nicht dargestellt) befestigt werden kann. Die Befestigungsvorrichtung 1 weist dabei eine Betätigungsvorrichtung 5 auf, welche in diesem Ausführungsbeispiel als klappbarer Hebel ausgebildet ist. Die Dübelhülse 4, welche über den eben genannten Hebel gezogen werden kann, ist dabei außerhalb des Scharniertopfes 11 angeordnet.

Wird also die Betätigungsvorrichtung 5, wie in Fig. 2a dargestellt, umgeklappt und erreicht eine horizontale Position, wie in Fig. 2b dargestellt, so wurde durch diese Betätigungsvorrichtung 5 die Dübelhülse 4 in Richtung Betätigungsvorrichtung 5 gezogen und spreizte sich dabei am Dübelkern 3.

Fig. 3a zeigt einen Schnitt durch ein Möbeltell 13 und dessen Bohrung 14. In dieser Bohrung 14 befinden sich ausschließlich der Dübelkern 3, die Distanzscheibe 12 und die Dübelhülse 4. Auf dem Dübelkern 3 sitzt die optionale Distanzscheibe 12, diese bewirkt bei einem Zug der Dübelhülse 4 über den Dübelkern 3, dass sich der Dübelkern 3 geringer am Befestigungsflansch 10 verformt, wodurch eine bessere Kraftübertragung Im gesamten System erreicht wird.

Sowohl der Dübelkern 3 als auch die Dübelhülse 4 sind in diesem Ausführungsbeispiel radial federnd ausgebildet und bestehen vornehmlich aus einem metallischen Werkstoff. Außerdem weisen sie Längsschlitze auf, wobei in diesem Ausführungsbeispiel der Dübelkern 3 einen durchgängigen Längsschlitz 6 (nicht dargestellt) und die Dübelhülse 4 mehrere nicht durchgängige Längsschlitze aufweist. Sowohl der Dübelkern 3 als auch die Dübelhülse 4 weisen mehrere in axialer Richtung versetzte Schrägflächen 7, 7, 7", 8, 8', 8" auf. Unter axiale Richtung wird dabei in Richtung der Längsachse der Bohrung 14 verstanden, was der Einsetzrichtung des Dübelkerns 3 und der Dübelhülse 4 der Befestigungsvorrichtung 1 entspricht. Somit ergibt sich für die Dübelhülse 4 eine im Wesentlichen - im Querschnitt gesehen - wellenförmige Innenmantelfläche 9 und für den Dübelkern 3 eine im Wesentlichen - im Querschnitt gesehen - wellenförmige Außenmantelfläche 9', wobei diese beiden wellenförmigen Mantelflächen (9, 9') miteinander korrespondieren.

Fig. 3b zeigt einen Dübelkern 3 und eine Dübelhülse 4 einer Befestigungsvorrichtung 1 wie eben in Fig. 3a beschrieben, mit dem Unterschied, dass in Fig. 3b die Befestigungsvorrichtung 1 mit der Betätigungsvorrichtung 5 betätigt worden ist (siehe Fig. 2a und 2b, hier nicht dargestellt). In die Bohrung 14 des Möbelteils 13 ragt dabei immer noch nur der Dübelkern 3 und die Dübelhülse 4 der Befestigungsvorrichtung 1, wobei der Dübelkern 3 dabei noch mit einer optionalen Distanzscheibe 12 versehen ist, welche bei Belastung des Möbelbeschlags 2 Querkräfte aufnehmen kann, um unter anderem eine geringere Deformation des Dübelkerns 3 am Befestigungsflansch 10 zu erreichen.

Durch das Betätigen der Betätigungsvorrichtung 5 (nicht dargestellt) wird die Dübelhülse 4 in Richtung Befestigungsflansch 10 gezogen und spreizt sich dabei am Dübelkern 3 auf und verankert somit die Befestigungsvorrichtung 1 in der Bohrung 14 des Möbelteils 13. Dadurch, dass die Schrägflächen 7, 7' des Dübelkerns 3 mit den Schrägflächen 8, 8' der Dübelhülse 4 korrespondieren, erfolgt ein im Wesentlichen gleichmäßiges Aufspreizen der Dübelhülse 4 an mehreren axial versetzten Stellen. Durch diese kontinuierliche Spreizung der Dübelhülse 4 werden Materialtoleranzen des Möbelteils 13 - einmal ist das gleiche Material etwas härter ausgebildet, einmal etwas weicher - ausgeglichen und wirken sich somit nicht negativ auf den Halt des Möbelbeschlags 2 im Möbelteil 13 aus. Des Weiteren bewirkt der radial federnde Dübelkern 3, dass ein hoher Halt des Möbelbeschlags 2 in verschiedenen Materialien des Möbelteils 13 wie Hartholz, MDF, Spanplatten, Weichholz usw. erzielt wird, da bei einem harten Material des Möbeiteils 13 der federnde Dübelkern 3 sich mehr nach innen verformt, hingegen bei einem weicheren Material des Möbelteils 13 der federnde Dübelkern 3 sich weniger verformt. Somit wird unabhängig vom Material eine konstante Kraft von der Befestigungsvorrichtung 1 auf das Möbelteil 12 übertragen und trotzdem ausreichend Halt für den Möbelbeschlag 2 im Möbelteil 13 erzielt.

Sowohl im gespreizten Zustand als auch im entspannten Zustand weisen der Dübelkern 3 und die Dübelhülse 4 einen ständigen Oberflächenkontakt zueinander auf, was bei einer dynamischen Belastung des Möbelteils 13 dazu führt, dass durch den federnden Dübelkern 3 ein Nachdrücken der Befestigungsvorrichtung 1 auf das Möbelteil 13 erfolgt und somit den Halt des Möbelbeschlags 2 in der Bohrung 14 des Möbelteils 13 unter Belastung erhöht.

Durch die kontinuierliche Spreizung, also dadurch dass die Dübelhülse 4 nicht nur an ihrem unteren Ende aufgespreizt wird sondern die Spreizung gleichmäßig entlang ihrer Mantelfläche erfolgt, kann eine Kraftübertragung auch an "zu großen" Bohrungen 14 eines Möbelteils 13 erfolgen und es wird ein hoher Halt, wie bei ordnungsgemäß durchgeführten Bohrungen 14, sichergestellt.

Weiters wird dadurch, dass die Dübelhülse 4 und der Dübelkern 3 auch im entspannten Zustand einen ständigen Oberflächenkontakt zu einander aufweisen die Befestigungsvorrichtung 1 in ihrer Position gehalten, was dazu führt, dass ein leichtes Einsetzen des Möbelbeschlags 2 und dessen Befestigungsvorrichtung 1 in die Bohrung 14 eines Möbelteils 13 ermöglicht, was ein rasches Montieren des Möbelbeschlags 2 im Möbelteil 13 ermöglicht.

Eine derartige Befestigungsvorrichtung 1 erzielt also den positiven Effekt, dass sowohl ein guter Halt eines Möbelbeschlags 2 in unterschiedlichen Materialien eines Möbelteils 13 gewährleistet wird und auch dass sich Materialtoleranzen des Möbelteils 13 nicht negativ auf den Halt des Möbelbeschlags 2 auswirken. Des Weiteren wird der Kraftaufwand zum Betätigen der Betätigungsvorrichtung 5 gering gehalten, da durch die federnde Wirkung der Dübelhülse 4 und des Dübelkerns 3 die Kraftübertragung positiv beeinflusst wird.

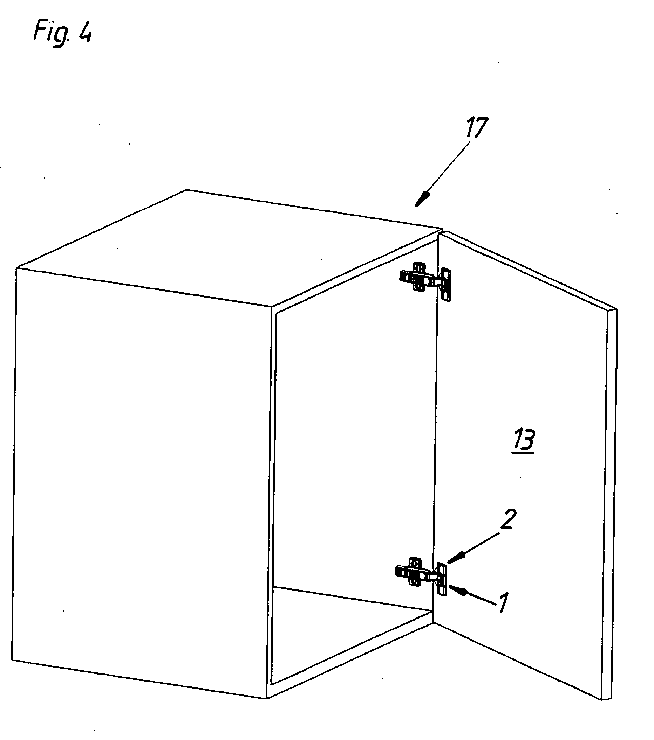

Fig. 4 zeigt ein Möbel 17 mit einem Möbelteil 13, an dem ein Möbelbeschlag 2 mittels einer Befestigungsvorrichtung 1 angebracht ist.

Wenn auch in diesen Ausführungsbeispielen die Befestigungsvorrichtung 1 ausschließlich außerhalb des Schamiertopfes 11 angeordnet ist, so ist dies nicht als Einschränkung zu sehen. Ebenso ist es vorstellbar, dass eine derartige Befestigungsvorrichtung 1 in jeglicher Bohrung eines Möbelteils 13 zum Einsatz gelangen kann um einen Möbelbeschlag 2 in einem Möbelteit 13 zu befestigen.

Die dargestellten Ausführungsbeispiele von Befestigungsvorrichtungen für Möbelbeschläge an Möbelteilen sind selbstverständlich nicht in einschränkendem Sinn zu verstehen, sondern eben nur einzelne Beispiele von zahlreichen Möglichkeiten, um den Erfindungsgedanken einer Befestigungsvorrichtung für Möbelbeschläge zu realisieren.

### Bezugszeichenliste:

| | |
|---|---|
| 1 | Befestigungsvorrichtung |
| 2 | Möbelbeschlag |
| 3 | Dübelkern |
| 4 | Dübelhülse |
| 5 | Betätigungsvorrichtung |
| 6 | Längsschlitz |
| 7, 7', 7" | Schrägfläche des Dübelkems 3 |
| 8, 8', 8" | Schrägfläche der Dübelhülse 4 |
| 9 | Innenmantelfläche der Dübelhülse 4 |
| 9' | Außenmantelfläche des Dübelkerns 3 |
| 10 | Befestigungsflansch |
| 11 | Scharniertopf |
| 12 | Distanzscheibe |
| 13 | Möbelteil |
| 14 | Bohrung |
| 15 | Bolzen |
| 16 | Bohrung des Schamiertopfes 11 |
| 17 | Möbel |
| 18 | Nase am Dübelkem 3 |

## Patentansprüche

1. Befestigungsvorrichtung (1) für Möbelbeschläge (2) an Möbelteilen (13), mit:
- mindestens einem in eine Bohrung (14) eines Möbelteils (13) einsetzbaren Dübelkern (3), der innerhalb einer Dübelhülse (4) angeordnet ist, und
- einer Betätigungsvorrichtung (5), über die die Dübelhülse (4) relativ zum Dübelkern (3) bewegbar ist, wobei sich die Dübelhülse (4) am Dübelkern (3) aufspreizt,
**dadurch gekennzeichnet, dass** der Dübelkern (3) und die Dübelhülse (4) mindestens zwei, vorzugsweise mehrere, in axialer Richtung versetzte, korrespondierende Schrägflächen (7, 7', 7", 8, 8', 8") aufweisen, wobei beim relativen Bewegen von Dübelhülse (4) zum Dübelkem (3) ein im Wesentlichen gleichmäßiges Spreizen der Dübelhülse (4) an zwei, vorzugsweise mehreren, axial versetzten Stellen erfolgt.

2. Befestigungsvorrichtung nach Anspruch 1, **dadurch gekennzeichnet, dass** der Dübelkern (3) als, vorzugsweise im Wesentlichen zylindrische, Federkernhülse ausgebildet ist.

3. Befestigungsvorrichtung nach Anspruch 1 oder 2, **dadurch gekennzeichnet, dass** der Dübelkem (3) zumindest einen, vorzugsweise im Wesentlichen axial verlaufenden, durchgängigen Längsschlitz (6) aufweist.

4. Befestigungsvorrichtung nach einem der Ansprüche 1 bis 3, **dadurch gekennzeichnet, dass** der Dübelkern (3) zumindest teilweise, vorzugsweise im Wesentlichen vollständig, aus einem metallischen Werkstoff, vorzugsweise Federstahl, gebildet ist.

5. Befestigungsvorrichtung nach einem der Ansprüche 1 bis 4, **dadurch gekennzeichnet, dass** der Dübelkem (3) zumindest eine Schrägfläche (7, 7', 7") - vorzugsweise mehrere in axialer Richtung versetzte Schrägflächen (7, 7', 7") - aufweist.

6. Befestigungsvorrichtung nach einem der Ansprüche 1 bis 5, **dadurch gekennzeichnet, dass** die Dübelhülse (4) radial federnd ausgebildet ist.

7. Befestigungsvorrichtung nach einem der Ansprüche 1 bis 6, **dadurch gekennzeichnet, dass** die Dübelhülse (4) zumindest teilweise, vorzugsweise im Wesentlichen vollständig, aus einem metallischen Werkstoff, vorzugsweise Federstahl, gebildet ist.

8. Befestigungsvorrichtung nach einem der Ansprüche 1 bis 7, **dadurch gekennzeichnet, dass** die Dübelhülse (4) zumindest eine Schrägfläche (8, 8', 8") - vorzugsweise mehrere in axialer Richtung versetzte Schrägffächen (8, 8', 8") - aufweist.

9. Befestigungsvorrichtung nach einem der Ansprüche 1 bis 8, **dadurch gekennzeichnet, dass** der Dübelkern (3) radial federnd ausgebildet ist.

10. Befestigungsvorrichtung nach einem der Ansprüche 1 bis 9, **dadurch gekennzeichnet, dass** die Dübelhülse (4) eine im Wesentlichen - im Querschnitt gesehen - wellenförmige Innenmantelfläche (9) aufweist und der Dübelkern (3) eine im Wesentlichen - im Querschnitt gesehen - wellenförmige, mit der Innenmantelfläche (9) korrespondierende, Außenmantelfläche (9') aufweist.

11. Befestigungsvorrichtung nach einem der Ansprüche 1 bis 10, **dadurch gekennzeichnet, dass** die Dübelhülse (4) und der Dübelkern (3) sowohl im gespreizten Zustand als auch im entspannten Zustand ständigen Oberflächenkontakt zueinander aufweisen.

12. Möbelbeschlag (2) mit einer Befestigungsvorrichtung (1) nach einem der Ansprüche 1 bis 11.

13. Möbelbeschlag nach Anspruch 12, **dadurch gekennzeichnet, dass** der Möbelbeschlag (2) einen Befestigungsflansch (10) aufweist, wobei der Dübelkern (3) am Befestigungsflansch (10) angeordnet ist und die Dübelhülse (4) über die Betätigungsvorrichtung (5) in Richtung Befestigungsflansch (10) ziehbar angeordnet ist.

14. Möbelteil (13) mit einem Möbelbeschlag nach Anspruch 12 oder 13, **dadurch gekennzeichnet, dass** in die jeweilige Bohrung (14) des Möbelteils (13) nur der Dübelkern (3) und die Dübelhülse (4) der Befestigungsvorrichtung (1) ragen.

15. Möbel (17) mit einer Befestigungsvorrichtung (1) nach einem der Ansprüche 1 bis 11 und einem Möbelbeschlag (2) nach Anspruch 12 oder 13 und einem Möbelteil (13) nach Anspruch 14.

## Claims

1. A fastening device (1) for furniture fittings (2) on furniture parts (13), having:
• at least one dowel core (3) that can be inserted into a drilled hole (14) of a furniture part (13), which is arranged inside a dowel sleeve (4); and
• an actuating device (5) via which the dowel sleeve (4) is capable of being moved relative to the dowel core (3), by means of which the dowel sleeve (4) expands on the dowel core (3);
**characterized in that** the dowel core (3) and the dowel sleeve (4) are provided with at least two, preferably a plurality of, corresponding inclined surfaces (7, 7', 7" 8, 8', 8") that are offset in the axial direction, whereby relative movement of the dowel sleeve (4) with respect to the dowel core (3) causes a substantially even expansion of the dowel sleeve (4) at two, preferably a plurality of, axially offset locations.

2. The fastening device as claimed in claim 1, **characterized in that** the dowel core (3) is constructed as a spring core sleeve that is preferably essentially cylindrical.

3. The fastening device as claimed in claim 1 or claim 2, **characterized in that** the dowel core (3) is provided with at least one, preferably essentially axial, longitudinal continuous slit (6).

4. The fastening device as claimed in one of claims 1 to 3, **characterized in that** the dowel core (3) is constructed at least in part, preferably essentially entirely, from a metallic material, preferably spring steel.

5. The fastening device as claimed in one of claims 1 to 4, **characterized in that** the dowel core (3) is provided with at least one inclined surface (7, 7', 7") - preferably with a plurality of inclined surfaces (7, 7', 7") that are offset in an axial direction.

6. The fastening device as claimed in one of claims 1 to 5, **characterized in that** the dowel sleeve (4) is constructed such that it is radially resilient.

7. The fastening device as claimed in one of claims 1 to 6, **characterized in that** the dowel sleeve (4) is at least partially, preferably essentially entirely, constructed from a metallic material, preferably spring steel.

8. The fastening device as claimed in one of claims 1 to 7, **characterized in that** the dowel sleeve (4) is provided with at least one inclined surface (8, 8', 8") - preferably with a plurality of inclined surfaces (8, 8', 8") - that are offset in an axial direction.

9. The fastening device as claimed in one of claims 1 to 8, **characterized in that** the dowel core (3) is constructed such that it is radially resilient.

10. The fastening device as claimed in one of claims 1 to 9, **characterized in that** the dowel sleeve (4) has an essentially - viewed in cross-section - corrugated inner sheath surface (9), and the dowel core (3) has an essentially - viewed in cross-section - corrugated outer sheath surface (9') which matches the inner sheath surface (9).

11. The fastening device as claimed in one of claims 1 to 10, **characterized in that** the dowel sleeve (4) and the dowel core (3) are in constant mutual surface contact both in the expanded condition and in the relaxed condition.

12. A furniture fitting (2) with a fastening device (1) as claimed in one of claims 1 to 11.

13. A furniture fitting (2) as claimed in claim 12, **characterized in that** the furniture fitting (2) is provided with a fastening flange (10), wherein the dowel core (3) is arranged on the fastening flange (10) and the dowel sleeve (4) is arranged such that it can be drawn by means of the actuating device (5) in the direction of the fastening flange (10).

14. A furniture part (13) comprising a furniture fitting as claimed in claim 12 or 13, **characterized in that** only the dowel core (3) and the dowel sleeve (4) of the fastening device (1) project into the respective drilled hole (14) of the furniture part (13).

15. An item of furniture (17) provided with a fastening device (1) as claimed in one of claims 1 to 11 and a furniture fitting (2) as claimed in claim 12 or 13 and a furniture part (13) as claimed in claim 14.

## Revendications

1. Dispositif de fixation (1) pour des ferrures de meuble (2) sur des parties de meuble (13), avec:
- au moins un noyau de cheville (3) pouvant être introduit dans un alésage (14) d'une partie de meuble (13) et qui est disposé à l'intérieur d'une douille de cheville (4), et
- un dispositif d'actionnement (5) par le biais duquel la douille de cheville (4) peut être déplacée par rapport au noyau de cheville (3), la douille de cheville (4) s'écartant sur le noyau de cheville (3),
**caractérisé en ce que** le noyau de cheville (3) et la douille de cheville (4) présentent au moins deux, de préférence plusieurs, faces obliques (7, 7', 7", 8, 8', 8") correspondantes placées dans la direction axiale, un écartement sensiblement régulier de la douille de cheville (4) s'effectuant sur deux, de préférence plusieurs, emplacements placés axialement lors du déplacement relatif de la douille de cheville (4) par rapport au noyau de cheville (3).

2. Dispositif de fixation selon la revendication 1, **caractérisé en ce que** le noyau de cheville (3) est réalisé en tant que douille de noyau à ressort, de préférence sensiblement cylindrique.

3. Dispositif de fixation selon la revendication 1 ou 2, **caractérisé en ce que** le noyau de cheville (3) présente au moins une fente longitudinale (6) continue, de préférence disposée sensiblement axialement.

4. Dispositif de fixation selon une des revendications 1 à 3, **caractérisé en ce que** le noyau de cheville (3) est formé au moins partiellement, de préférence sensiblement complètement, d'un matériau métallique, de préférence un acier à ressorts.

5. Dispositif de fixation selon une des revendications 1 à 4, **caractérisé en ce que** le noyau de cheville (3) présente au moins une face oblique (7, 7', 7") - de préférence plusieurs faces obliques (7, 7', 7") placées dans la direction axiale.

6. Dispositif de fixation selon une des revendications 1 à 5, **caractérisé en ce que** la douille de cheville (4) est réalisée de façon élastique radialement.

7. Dispositif de fixation selon une des revendications 1 à 6, **caractérisé en ce que** la douille de cheville (4) est formée, au moins partiellement, de préférence sensiblement complètement, d'un matériau métallique, de préférence un acier à ressorts.

8. Dispositif de fixation selon une des revendications 1 à 7, **caractérisé en ce que** la douille de cheville (4) présente au moins une face oblique (8, 8', 8") - de préférence plusieurs faces obliques (8, 8', 8") placées dans la direction axiale.

9. Dispositif de fixation selon une des revendications 1 à 8, **caractérisé en ce que** le noyau de cheville (3) est réalisé de façon élastique radialement.

10. Dispositif de fixation selon une des revendications 1 à 9, **caractérisé en ce que** la douille de cheville (4) présente une surface d'enveloppe interne (9) sensiblement ondulée, vue en section transversale, et **en ce que** le noyau de cheville (3) présente une surface d'enveloppe externe (9') sensiblement ondulée, vue en section transversale, correspondant à la surface d'enveloppe interne (9).

11. Dispositif de fixation selon une des revendications 1 à 10, **caractérisé en ce que** la douille de cheville (4) et le noyau de cheville (3) présentent, aussi bien dans l'état écarté que dans l'état détendu, un contact superficiel permanent l'un avec l'autre.

12. Ferrure de meuble (2) avec un dispositif de fixation (1) selon une des revendications 1 à 11.

13. Ferrure de meuble selon la revendication 12, **caractérisée en ce que** la ferrure de meuble (2) présente une bride de fixation (10), le noyau de cheville (3) étant disposé sur la bride de fixation (10), et la douille de cheville (4) étant disposée de façon à pouvoir être étirée en direction de la bride de fixation (10) par le biais du dispositif d'actionnement (5).

14. Partie de meuble (13) avec une ferrure de meuble selon la revendication 12 ou 13, **caractérisée en ce que** seuls le noyau de cheville (3) et la douille de cheville (4) du dispositif de fixation (1) entrent dans l'alésage (14) respectif de la partie de meuble (13).

15. Meuble (17) avec un dispositif de fixation (1) selon une des revendications 1 à 11 et avec une ferrure de meuble (2) selon la revendication 12 ou 13 et avec une partie de meuble (13) selon la revendication 14.
